# EUROPÄISCHE PATENTSCHRIFT

(11) **EP 3 360 216 B1**
(45) Veröffentlichungstag und Bekanntmachung des Hinweises auf die Patenterteilung: **11.11.2020**
(21) Anmeldenummer: 16770749.6
(22) Anmeldetag: 23.09.2016
(51) Int. Cl.: H02H 1/06, H02H 9/04

(54) **ELEKTRISCHE SCHUTZSCHALTUNG**
ELECTRICAL PROTECTIVE CIRCUIT
CIRCUIT DE PROTECTION ÉLECTRIQUE

(30) Priorität: 09.10.2015 DE 102015117232
(43) Veröffentlichungstag der Anmeldung: 15.08.2018
(73) Patentinhaber: Phoenix Contact GmbH & Co. KG, 32825 Blomberg (DE)
(72) Erfinder: SCHMIDT, Olaf, 59494 Soest-Müllingsen (DE); ZEUCH, Jochen, 32825 Blomberg (DE)
(74) Vertreter: Patentship Patentanwaltsgesellschaft mbH
(86) Internationale Anmeldenummer: PCT/EP2016/072659
(87) Internationale Veröffentlichungsnummer: WO 2017/060100

(56) Entgegenhaltungen:
- EP-A1- 2 219 205
- US-A1- 2015 062 768
- US-A1- 2015 229 121

## Beschreibung

Die vorliegende Erfindung betrifft eine elektrische Schutzschaltung.

Zum Schutz einer elektrischen Schaltung vor einer Überspannung oder einer Verpolung einer anliegenden elektrischen Spannung kann ein Überspannungsschutz bzw. ein Verpolschutz eingesetzt werden. Der Verpolschutz umfasst dabei häufig eine Diode, welche antiparallel zur elektrischen Spannung angeordnet ist und welche die Spannung bei einer Verpolung auf eine Durchlassspannung der Diode begrenzt. Zusätzlich zu der Diode wird meist eine Sicherung eingesetzt, welche bei Verpolung auslöst. Der Überspannungsschutz umfasst meist entweder einen Schalter, welcher in Reihe zu der elektrischen Spannung geschaltet ist und bei Überspannung öffnet, oder einen Schalter, welcher parallel zu der elektrischen Spannung geschaltet ist, und bei Überspannung schließt. An den Schaltern eines Überspannungsschutzes können jedoch hohe Verluste im Normalbetrieb auftreten. Ferner können derartige Schalter oft nur kurzzeitig eingesetzt werden.

Ferner können sogenannte Crowbar- oder Klemmschaltungen als Überspannungsschutz eingesetzt werden. Eine Crowbar-Schaltung umfasst einen Kurzschlussschalter und eine Überspannungserkennung, welche den Kurschlussschalter bei einer erfassten Überspannung aktiviert, wodurch die elektrische Spannung kurzgeschlossen wird.

Solche Schutzschaltungen sind beispielweise aus US 2015/062768, EP 2219205, US 2015/229121 bekannt.

Der Kurzschlussschalter der Crowbar-Schaltung kann ein Thyristor oder ein Feldeffekttransistor (FET) sein. Der Thyristor kann bei einer vorliegenden Überspannung eingeschaltet werden, um die Anschlusspole kurzzuschließen, und so lange von selbst eingeschaltet bleiben, bis ein Haltestrom des Thyristors unterschritten wird. An dem Thyristor treten jedoch meist hohe Verluste auf. Um diese zu begrenzen, wird meist zusätzlich eine Sicherung in die elektrische Schaltung eingeschaltet, welche in Folge des Einschaltens des Thyristors auslöst. Diese Sicherung führt jedoch zu starken Einschränkungen bei einer an die Crowbar-Schaltung angeschlossenen Strom- oder Spannungsversorgungseinrichtung. Um beispielsweise ein schnelle Auslösung der Sicherung zu gewährleisten, muss eine angeschlossene Stromquelle einen 3-fach höheren Strom liefern können als ein Nennwert der Sicherung beträgt.

Ist der Kurzschlussschalter hingegen ein FET, so wird zum Ansteuern des Kurschlussschalters meist eine externe Energiequelle benötigt, wodurch zusätzliche Kosten entstehen können. Ferner ist bei einem Ausfall der externen Energiequelle die Schutzfunktion der Crowbar-Schaltung nicht mehr gewährleistet. Wird die Ansteuerenergie des FET anstatt aus einer externen Energiequelle aus einer Eingangsspannung der Crowbar-Schaltung gewonnen, so kann die Schutzfunktion bei einer Verpolung der Eingangsspannung ebenfalls nicht mehr gewährleistet sein.

Es ist die der Erfindung zugrundeliegende Aufgabe, eine energieeffiziente elektrische Schutzschaltung anzugeben.

Diese Aufgabe wird durch Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch eine elektrische Schutzschaltung gelöst, mit einem Eingangsterminal, an welches eine elektrische Spannung anlegbar ist, einem schließbaren Schaltpfad, welcher parallel zu dem Eingangsterminal angeordnet ist, wobei in dem schließbaren Schaltpfad ein steuerbarer Schalter zum Schließen des schließbaren Schaltpfades geschaltet ist, einer Erfassungseinrichtung, welche an das Eingangsterminal geschaltet und ausgebildet ist, eine an dem Eingangsterminal anliegende elektrische Fehlspannung zu erfassen, wobei die Erfassungseinrichtung ausgebildet ist, bei erfasster Fehlspannung ein Steuersignal an den steuerbaren Schalter zum Schießen des steuerbaren Schalters auszusenden, um den schließbaren Schaltpfad zu schießen, und einer Energieversorgungseinrichtung, welche parallel zu dem schließbaren Schaltpfad geschaltet und ausgebildet ist, eine über dem geschlossenen steuerbaren Schalter abfallende Spannung in eine Versorgungsspannung umzuwandeln und die Versorgungsspannung an die Erfassungseinrichtung anzulegen. Dadurch wird der Vorteil erreicht, dass ein effizienter Schutz vor Fehlspannungen geschaffen wird. Da die elektrische Schutzschaltung die Energieversorgungseinrichtung umfasst und von dieser durch die Versorgungsspannung versorgt wird, kann auf externe Energiequellen zur Energieversorgung der elektrischen Schutzschaltung verzichtet werden.

Das Eingangsterminal kann einen ersten Pol und einen zweiten Pol umfassen, an welchen die elektrische Spannung in Form einer Potentialdifferenz anliegen kann. Das Schließen des schließbaren Schaltpfads kann ein Kurzschließen des Eingangsterminals, bzw. des ersten Pols und des zweiten Pols, über den schließbaren Schaltpfad bewirken. Die elektrische Schutzschaltung kann über das Eingangsterminal an eine Spannungsversorgungseinrichtung und/oder eine Stromversorgungseinrichtung angeschlossen werden, und den schließbaren Schaltpfad bei Erfassen einer Fehlspannung der Stromversorgungseinrichtung und/oder der Spannungsversorgungseinrichtung schließen, um die Strom- und/oder Spannungsversorgungseinrichtung über den schließbaren Schaltpfad kurzzuschließen.

Die elektrische Spannung kann eine Gleichspannung sein. Insbesondere kann die elektrische Spannung Spannungswerte von bis zu 60 VDC, beispielsweise für Anwendungen in der Automatisierungs- oder Kraftfahrzeugtechnik, umfassen.

Die elektrische Schutzschaltung kann als abgeschlossenes Modul vorliegen, welches beispielsweise ein Gehäuse umfasst, in dem all Komponenten der Schutzschaltung angeordnet sind. Ferner kann die Schutzschaltung elektrische Leitungen umfassen, welche die Komponenten der Schutzschaltung elektrisch verbinden.

Die Erfassungseinrichtung kann ferner eine elektrische Schaltung zum Erfassen der Fehlspannung und zum Ansteuern des steuerbaren Schalters umfassen. Die Erfassungseinrichtung kann über eine elektrische Leitung an den steuerbaren Schalter elektrisch angeschlossen sein. Ferner kann die Erfassungseinrichtung zum Erfassen der Fehlspannung an das Eingangsterminal elektrisch angeschlossen sein.

Die Energieversorgungseinrichtung kann den Spannungsabfall an dem schließbaren Schaltpfad, insbesondere aus einem Spannungsabfall an dem steuerbaren Schalter und/oder den Zuleitungswiderständen des schließbaren Schaltpfads, in die Versorgungsspannung umwandeln. Der Spannungsabfall an dem schließbaren Schaltpfad kann 50 mV, 100 mV, 150 mV, 200 mV, oder 250 mV betragen.

Gemäß einer Ausführungsform weist die Energieversorgungseinrichtung einen Energiespeicher, insbesondere einen Kondensator und/oder eine Spule, auf, welcher durch die Versorgungsspannung aufladbar ist, wobei der Energiespeicher mit einem Versorgungsspannungseingang der Erfassungseinrichtung gekoppelt ist. Dadurch wird der Vorteil erreicht, dass die Energieversorgungseinrichtung die Versorgungsspannung effizient und unabhängig von Schwankungen der abfallenden Spannung bereitstellen kann.

Schwankungen der abfallenden Spannung, beispielsweise bei einem Hiccup-Betrieb einer Spannungsversorgungseinrichtung, welche die elektrische Spannung erzeugt, können somit bei der Umwandlung der abfallenden Spannung in die Versorgungsspannung kompensiert werden.

In einer vorteilhaften Ausführungsform der elektrischen Schutzschaltung ist die Energieversorgungseinrichtung ausgebildet, bei geöffnetem steuerbaren Schalter oder bei Erreichen eines Spannungsschwellwertes der an dem steuerbaren Schalter abfallenden Spannung in einen inaktiven Zustand überzugehen, in welchem die Umwandlung der abfallenden Spannung in die Versorgungsspannung unterbunden ist. Dadurch wird der Vorteil erreicht, dass die Energieversorgungseinrichtung die Versorgungsspannung nur bei Bedarf, insbesondere bei Vorliegen der Fehlspannung, erzeugt. Dies kann einen Energieverbrauch der elektrischen Schutzschaltung verringern.

Die Energieversorgungseinrichtung kann in einen inaktiven Zustand übergehen, wenn die Umwandlung der am steuerbaren Schalter abfallenden Spannung in die Versorgungsspannung nicht benötigt wird, beispielsweise wenn der steuerbare Schalter geöffnet ist, oder wenn die Umwandlung nicht möglich ist, beispielsweise wenn die abfallende Spannung zu gering ist um die Versorgungsspannung zu erzeugen. Die Energieversorgungseinrichtung kann im inaktiven Zustand hochohmig sein.

In einer weiteren vorteilhaften Ausführungsform der elektrischen Schutzschaltung umfasst der steuerbare Schalter einen Transistor, insbesondere einen normal sperrenden FET-Transistor. Bei dem FET-Transistor kann es sich um einen MOSFET-Transistor handeln.

In einer weiteren vorteilhaften Ausführungsform der elektrischen Schutzschaltung umfasst das Steuersignal eine Steuerspannung, wobei die Erfassungseinrichtung ausgebildet ist, die Steuerspannung bei Erfassen der Fehlspannung an einen Gate-Anschluss des Transistors anzulegen. Dadurch wir der Vorteil erreicht, dass eine effizientes Schließen des schließbaren Schaltpfades bei anlegen der Steuerspannung erfolgen kann.

In einer weiteren vorteilhaften Ausführungsform der elektrischen Schutzschaltung sind die Versorgungsspannung und die Steuerspannung gleich. Die Erfassungseinrichtung kann in diesem Fall ausgebildet sein, beim Erfassen der Fehlspannung die Versorgungsspannung an den steuerbaren Schalter weiterzuleiten, um den steuerbaren Schalter zu schließen.

In einer weiteren vorteilhaften Ausführungsform der elektrischen Schutzschaltung ist die elektrische Fehlspannung eine Überspannung und/oder eine Verpolung der elektrischen Spannung. Dadurch wird der Vorteil erreicht, dass ein effizienter Schutz vor Überspannung und/oder Verpolung der elektrischen Spannung geschaffen wird.

In einer weiteren vorteilhaften Ausführungsform der elektrischen Schutzschaltung ist in den schließbaren Schaltpfad eine Diode parallel zu dem steuerbaren Schalter geschaltet, wobei die Diode angeordnet ist, bei der Verpolung der elektrischen Spannung das Eingangsterminal kurzzuschließen. Dadurch wird der Vorteil erreicht, dass die elektrische Spannung bei einer Verpolung effizient begrenzt werden kann. Ferner kann bei einer Verpolung der elektrischen Spannung ein Strom, welcher von dem Eingangsterminal aufgenommen wird, über die Diode abgeführt werden.

In einer weiteren vorteilhaften Ausführungsform der elektrischen Schutzschaltung umfasst die Energieversorgungseinrichtung einen ersten Wandler, insbesondere einen DC-DC-Wandler, welcher ausgebildet ist, die über dem geschlossenen steuerbaren Schalter abfallende Spannung in die Versorgungsspannung umzuwandeln. Dadurch wird der Vorteil erreicht, dass die Versorgungspannung effizient und energiesparend erzeugt werden kann. Es wird insbesondere keine externe Energiequelle zur Erzeugung der Versorgungsspannung benötigt.

In einer weiteren vorteilhaften Ausführungsform der elektrischen Schutzschaltung umfasst die Energieversorgungseinrichtung einen zweiten Wandler, welcher zwischen den ersten Wandler und den Versorgungsspannungseingang der Erfassungseinrichtung geschaltet ist, und welcher ausgebildet ist, die von dem ersten Wandler erzeugte Versorgungsspannung konstant zu halten, insbesondere durch Erhöhung oder Erniedrigung konstant zu halten. Dadurch wird der Vorteil erreicht, dass die Versorgungsspannung effizient der Erfassungseinrichtung zur Verfügung gestellt werden kann. Durch den Einsatz von zwei Wandlern kann sichergestellt werden, dass die Versorgungsspannung auch dann effizient erzeugt werden kann, wenn die über dem geschlossenen steuerbaren Schalter abfallende Spannung gering ist oder Schwankungen unterliegt. Der zweite Wandler kann ein Hochsetzer und/oder ein Tiefsetzer sein.

In einer weiteren vorteilhaften Ausführungsform der elektrischen Schutzschaltung umfasst die Energieversorgungseinrichtung einen dritten Wandler, welcher ausgebildet ist, bei der Verpolung der elektrischen Spannung die über dem geschlossenen steuerbaren Schalter abfallende Spannung in die Versorgungsspannung umzuwandeln. Dadurch wird der Vorteil erreicht, dass die Versorgungsspannung auch bei einer Verpolung der elektrischen Spannung und/oder des Spannungsabfalls an dem steuerbaren Schalter effizient erzeugt werden kann.

In einer weiteren vorteilhaften Ausführungsform der elektrischen Schutzschaltung ist der zweiten Wandler zwischen den dritten Wandler und die Erfassungseinrichtung geschaltet, um die von dem dritten Wandler erzeugte Versorgungsspannung zu empfangen und vor dem Aussenden an die Erfassungseinrichtung konstant zu halten, insbesondere durch Erhöhung oder Erniedrigung konstant zu halten.

In einer weiteren vorteilhaften Ausführungsform der elektrischen Schutzschaltung umfasst die Energieversorgungseinrichtung einen Gleichrichter, insbesondere eine Diode, wobei der Gleichrichter ausgebildet ist, bei der Verpolung der elektrischen Spannung eine Verpolung der Versorgungsspannung zu unterbinden. Dadurch wird der Vorteil erreicht, dass die Versorgungsspannung auch bei einer Verpolung der elektrischen Spannung und/oder des Spannungsabfalls an dem steuerbaren Schalter effizient erzeugt werden kann.

In einer weiteren vorteilhaften Ausführungsform der elektrischen Schutzschaltung ist die Erfassungseinrichtung ausgebildet, eine Signalstärke des Steuersignals zu verringern, wenn die Versorgungsspannung einen weiteren Spannungsschwellwert unterschreitet. Dadurch wird der Vorteil erreicht, dass ein geringer Spannungsabfall an dem steuerbaren Schalter effizient kompensiert werden kann. Die Verringerung des Steuersignals kann zu einer Erhöhung des elektrischen Widerstandes des steuerbaren Schalters und in Folge dessen zu einer Erhöhung der am steuerbaren Schalter abfallenden Spannung sowie der umgewandelten Versorgungsspannung führen.

In einer weiteren vorteilhaften Ausführungsform der elektrischen Schutzschaltung ist die Erfassungseinrichtung ausgebildet, eine Signalstärke des Steuersignals zu erhöhen, wenn die Versorgungsspannung einen Minimalspannungsschwellwert überschreitet.

In einer weiteren vorteilhaften Ausführungsform der elektrischen Schutzschaltung umfasst die Schutzschaltung ein Ausgangsterminal zum Ausgeben der elektrischen Spannung. Das Ausgangsterminal kann parallel zu dem schließbaren Schaltpfad angeordnet sein. Dadurch wird der Vorteil erreicht, dass die Schutzschaltung als Zwischenmodul, beispielsweise zwischen einer Strom- oder Spannungsquelle und einem Verbraucher, betrieben werden kann. Die Schutzschaltung kann den Verbraucher vor einer Fehlspannung der elektrischen Spannung, insbesondere einer Überspannung oder Verpolung, schützen. Die Schutzschaltung kann als Vierpol-Modul ausgebildet sein.

Gemäß einem zweiten Aspekt der Erfindung wird die Aufgabe durch eine Spannungsversorgungseinrichtung, insbesondere ein Spannungsnetzteil, gelöst, welche die elektrische Schutzschaltung gemäß dem ersten Aspekt der Erfindung umfasst. Dadurch wird der Vorteil erreicht, dass eine Spannungsversorgungseinrichtung geschaffen werden kann, welche effizient vor dem Ausgeben einer Fehlspannung, insbesondere einer Überspannung und/oder einer Verpolung, geschützt ist.

Ausführungsbeispiele der Erfindung sind in den Zeichnungen dargestellt und werden im Folgenden näher beschrieben.

### Es zeigen:

Fig. 1 ein schematisches Diagramm einer elektrischen Schutzschaltung gemäß einer Ausführungsform;
Fig. 2 ein schematisches Diagramm einer elektrischen Schutzschaltung gemäß einer Ausführungsform;
Fig. 3 ein schematisches Diagramm einer elektrischen Schutzschaltung mit einem Ausgangsterminal gemäß einer Ausführungsform; und
Fig. 4 ein schematisches Diagramm einer integrierten elektrischen Schutzschaltung gemäß einer Ausführungsform.

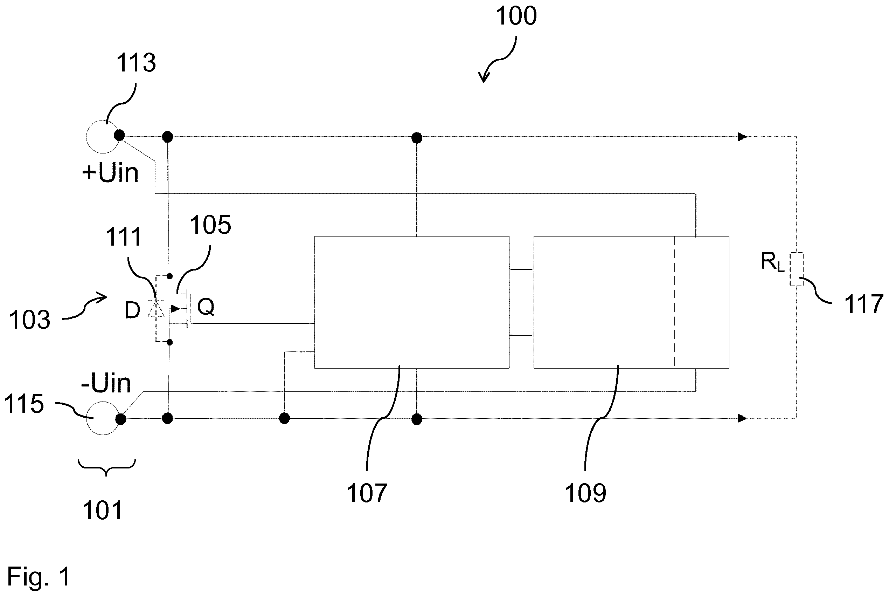

Fig. 1 zeigt ein schematisches Diagramm einer elektrischen Schutzschaltung 100 gemäß einer Ausführungsform

Die elektrische Schutzschaltung 100 umfasst ein Eingangsterminal 101, an welches eine elektrische Spannung anlegbar ist, einen schließbaren Schaltpfad 103, welcher parallel zu dem Eingangsterminal 101 angeordnet ist, wobei in dem schließbaren Schaltpfad 103 ein steuerbarer Schalter 105 zum Schließen des schließbaren Schaltpfades 103 geschaltet ist, und eine Erfassungseinrichtung 107, welche an das Eingangsterminal 101 geschaltet und ausgebildet ist, eine an dem Eingangsterminal 101 anliegende elektrische Fehlspannung zu erfassen, wobei die Erfassungseinrichtung 107 ausgebildet ist, bei erfasster Fehlspannung ein Steuersignal an den steuerbaren Schalter 105 zum Schießen des steuerbaren Schalters 105 auszusenden, um den schließbaren Schaltpfad 103 zu schießen. Ferner umfasst die elektrische Schutzschaltung 100 eine Energieversorgungseinrichtung 109, welche parallel zu dem schließbaren Schaltpfad 103 geschaltet und ausgebildet ist, eine über dem geschlossenen steuerbaren Schalter 105 abfallende Spannung in eine Versorgungsspannung umzuwandeln und die Versorgungsspannung an die Erfassungseinrichtung 107 anzulegen.

Das Eingangsterminal 101 kann einen ersten Pol 113 und einen zweiten Pol 115 umfassen, an welchen die elektrische Spannung in Form einer Potentialdifferenz anliegen kann. Das Schließen des schließbaren Schaltpfads 103 kann ein Kurzschließen des Eingangsterminals, bzw. des ersten Pols 113 und des zweiten Pols 115, über den schließbaren Schaltpfad 103 bewirken. Die elektrische Schutzschaltung 100 kann über das Eingangsterminal 101 an eine Spannungsversorgungseinrichtung und/oder eine Stromversorgungseinrichtung angeschlossen werden, und den schließbaren Schaltpfad 103 bei Erfassen einer Fehlspannung der Stromversorgungseinrichtung und/oder der Spannungsversorgungseinrichtung schließen, um die Strom- und/oder Spannungsversorgungseinrichtung über den schließbaren Schaltpfad 103 kurzzuschließen.

Die elektrische Spannung kann eine Gleichspannung sein. Insbesondere kann die elektrische Spannung Spannungswerte von bis zu 60 VDC, beispielsweise für Anwendungen in der Automatisierungs- oder Kraftfahrzeugtechnik, umfassen.

An die elektrische Schutzschaltung 100 kann eine Last 117 bzw. ein Verbraucher angeschlossen sein. Insbesondere kann die Last 117 parallel zu dem schließbaren Schaltpfad 103 geschaltet sein. Die elektrische Schutzschaltung 100 kann ausgebildet sein, die elektrische Spannung an die Last 117 weiterzugeben.

Die elektrische Schutzschaltung 100 kann als abgeschlossenes Modul vorliegen, welches beispielsweise ein Gehäuse umfasst, in dem all Komponenten der elektrischen Schutzschaltung 100 angeordnet sind. Ferner kann die elektrische Schutzschaltung 100 elektrische Leitungen umfassen, welche die Komponenten der elektrischen Schutzschaltung 100 elektrisch verbinden.

Die Erfassungseinrichtung 107 kann ferner eine elektrische Schaltung 209 zum Erfassen der Fehlspannung und zum Ansteuern des steuerbaren Schalters 105 umfassen. Die Erfassungseinrichtung 107 kann über eine elektrische Leitung an den steuerbaren Schalter 105 elektrisch angeschlossen sein. Ferner kann die Erfassungseinrichtung 107 zum Erfassen der Fehlspannung an das Eingangsterminal 101 elektrisch angeschlossen sein.

Die Energieversorgungseinrichtung 109 kann den Spannungsabfall an dem schließbaren Schaltpfad 103, insbesondere den Spannungsabfall an dem steuerbaren Schalter 105 und/oder den Zuleitungswiderständen des schließbaren Schaltpfads 103, in die Versorgungsspannung umwandeln. Der Spannungsabfall an dem schließbaren Schaltpfad 103 kann 50 mV, 100 mV, 150 mV, 200 mV, oder 250 mV betragen.

Der steuerbare Schalter 105 kann einen Transistor, insbesondere einen FET-Transistor oder MOSFET-Transistor, umfassen. Das Steuersignal kann eine Steuerspannung sein, wobei die Erfassungseinrichtung 107 ausgebildet ist, die Steuerspannung bei Erfassen der Fehlspannung an einen Gate-Anschluss des Transistors anzulegen. Der Transistor kann ferner als normal sperrender Transistor ausgebildet sein, und den schließbaren Schaltpfad 103 nur bei angelegter Steuerspannung am Gate-Anschluss schließen.

Die Steuerspannung kann der Versorgungsspannung entsprechen, insbesondere können die Steuerspannung und die Versorgungsspannung gleich sein. Die Erfassungseinrichtung 107 kann ausgebildet sein, die Versorgungsspannung bei erfassen der Fehlspannung an den Gate-Anschluss des Transistors anzulegen.

Die elektrische Fehlspannung kann eine Überspannung oder eine Verpolung der elektrischen Spannung umfassen. Somit kann die elektrische Schutzschaltung 100 als Überspannung oder Verpolschutz eingesetzt werden. Ist die elektrische Schutzschaltung 100 beispielsweise an eine Spannungsversorgungseinrichtung oder eine Stromversorgungseinrichtung angeschlossen, so kann die elektrische Schutzschaltung 100 eine Überspannung und/oder Verpolung der Strom- oder Spannungsquelle erfassen und bei erfasster Überspannung und/oder Verpolung die Strom- oder Spannungsversorgungseinrichtung über den schließbaren Schaltpfad 103 kurzschließen.

Die elektrische Schutzschaltung 100 in Fig. 1 umfasst ferner eine Diode 111, welche parallel zu dem steuerbaren Schalter 105 in den schließbaren Schaltpfad 103 geschaltet ist. Die Diode 111 kann dabei entgegen bzw. antiparallel zu einer regulären Stromrichtung in den schließbaren Schaltpfad 103 angeordnet sein.

Die Diode 111 kann als zusätzlicher Verpolschutz dienen. Bei einer Verpolung der elektrischen Spannung schließt die Diode 111 beispielsweise den ersten Pol 113 und den zweiten Pol 115 des Eingangsterminals 101 kurz. In dem Ausführungsbeispiel in Fig. 1 kann die Diode 111 bei einer Verpolung der elektrischen Spannung einen Strom vom ersten Pol 113 zum zweiten Pol 115 leiten. Dabei kann die Diode 111 die elektrische Spannung der verpolten Energieversorgung auf eine Durchlassspannung der Diode 111, welche beispielsweise zwischen 0,7 V und 1 V liegt, begrenzen. Bei der Diode 111 kann es sich um eine Zener-Diode handeln.

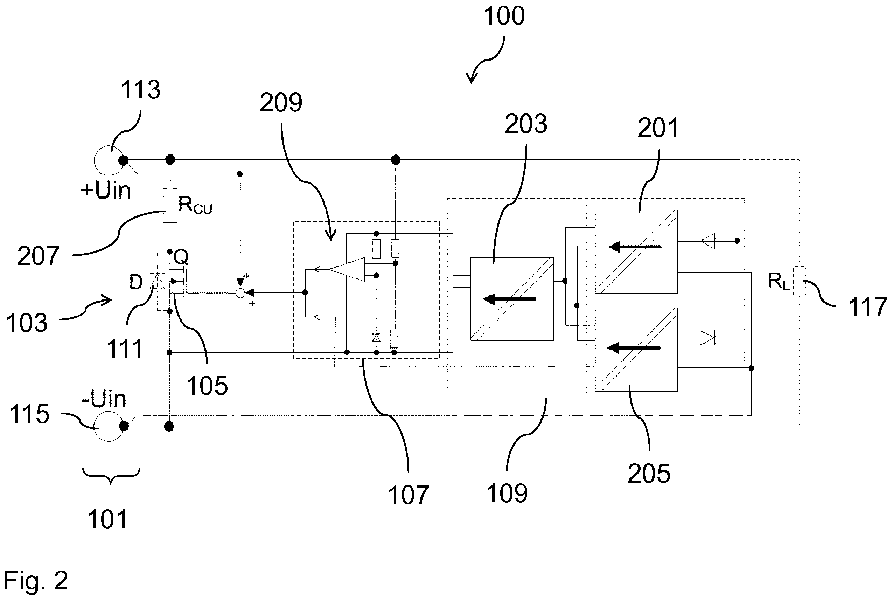

Fig. 2 zeigt ein schematisches Diagramm der elektrischen Schutzschaltung 100 gemäß einer weiteren Ausführungsform.

Die Energieversorgungseinrichtung in Fig. 2 umfasst einen ersten Wandler 201, einen zweiten Wandler 203 und einen dritten Wandler 205. Der erste Wandler 201, der zweite Wandler 203 und der dritte Wandler 205 können jeweils als DC-DC-Wandler ausgebildet sein, welche als Ladungspumpen fungieren und die am schließbaren Schaltpfad 103 abfallende Spannung in die Versorgungsspannung umwandeln, wobei die Versorgungsspannung größer als die abfallende Spannung sein kann.

Der erste Wandler 201 kann ausgebildet sein, die Versorgungsspannung bei einer regulären Polung der elektrischen Spannung zu erzeugen, und der dritte Wandler 205 kann ausgebildet sein, die Versorgungsspannung bei der Verpolung der elektrischen Spannung zu erzeugen.

Der zweite Wandler 203 kann zwischen den ersten Wandler 201 und einen Versorgungsspannungseingang der Erfassungseinrichtung 107, bzw. zwischen den dritten 205 Wandler und den Versorgungsspannungseingang der Erfassungseinrichtung 107 geschalten sein. Der zweite Wandler 203 kann ausgebildet sein, die von dem ersten Wandler 201 bzw. dem dritten Wandler 205 erzeugte Versorgungsspannung konstant zu halten, insbesondere durch Erhöhung oder Erniedrigung konstant zu halten, und an den Versorgungsspannungseingang der Erfassungseinrichtung 107 anzulegen. Durch den Einsatz des zweiten Wandlers 203 kann sichergestellt werden, dass die benötigte Versorgungsspannung auch dann effizient erzeugt werden kann, wenn die über dem geschlossenen steuerbaren Schalter 105 abfallende Spannung gering ist. Der zweite Wandler 203 kann ein Hochsetzer und/oder ein Tiefsetzer sein.

Gemäß einer Ausführungsform umfassen der erste Wandler 201 und/oder der zweite Wandler 203 und/oder der dritte Wandler 205 jeweils einen selbst leitenden Transistor und/oder einen Schwingkreis, insbesondere einen selbst-sperrenden Schwingkreis.

Gemäß einer weiteren Ausführungsform umfasst die Energieversorgungseinrichtung 109 einen Gleichrichter, insbesondere eine Diode. Der Gleichrichter kann ausgebildet sein, eine Verpolung der Versorgungsspannung bei Verpolung der elektrischen Spannung zu unterbinden oder zu kompensieren.

Gemäß einer weiteren Ausführungsform umfasst der Gleichrichter Dioden mit geringer Durchlassspannung. Ferner kann der Gleichrichter selbstleitende Schalter umfassen. Der Gleichrichter kann ein Brückengleichrichter sein.

Gemäß einer weiteren Ausführungsform umfasst die Energieversorgungseinrichtung 109 einen Energiespeicher, insbesondere einen Kondensator und/oder eine Spule. Der Energiespeicher kann durch die Versorgungsspannung aufladbar sein. Ferner kann der Energiespeicher mit dem Versorgungsspannungseingang der Erfassungseinrichtung 107 gekoppelt sein.

Der Energiespeicher kann Schwankungen der abfallenden Spannung, beispielsweise bei einem Hiccup-Betrieb einer Spannungsversorgungseinrichtung, welche die elektrische Spannung erzeugt, bei der Umwandlung der abfallenden Spannung in die Versorgungsspannung kompensieren. Ferner kann die Versorgungsspannung, nach dem Erfassen der Fehlspannung durch die Erfassungseinrichtung 107, mittels der im Energiespeicher gespeicherten Energie erzeugt werden. Nach dem Schließen des steuerbaren Schalters 105 kann die Versorgungsspannung dann aus der am geschlossenen steuerbaren Schalter 105 abfallenden Spannung erzeugt bzw. umgewandelt werden.

Gemäß einer weiteren Ausführungsform umfasst die Energieversorgungseinrichtung 107 eine Anzahl an Energie-Harvesting-Einrichtungen. Ferner können die Wandler 201, 203, 205 als Energie-Harvester-Wandler ausgebildet sein.

Der schließbare Schaltpfad 103 in Fig. 2 umfasst einen Widerstand 207 welcher zwischen dem steuerbaren Schalter 105 und dem ersten Pol 113 geschalten ist, und welcher den Leitungswiderstand des schließbaren Schaltpfades 103 darstellt.

Gemäß einer Ausführungsform ist die Energieversorgungseinrichtung 109 ausgebildet, den Spannungsabfall an dem steuerbaren Schalter 105 und/oder dem Leitungswiderstand 207 in die Versorgungsspannung umzuwandeln.

Die Erfassungseinrichtung 107 in Fig. 2 umfasst eine elektrische Schaltung 209 zum Erfassen der Fehlspannung und zum Ansteuern des steuerbaren Schalters 105. Die elektrische Schaltung 209 kann ein Oder-Gatter (OR-Gate) aus zwei Dioden zum Ansteuern des steuerbaren Schalters 105, welcher in Fig. 2 ein normal sperrender Transistor ist, umfassen.

Gemäß einer Ausführungsform ist die Erfassungseinrichtung 107 ausgebildet, eine Signalstärke des Steuersignals zu verringern, wenn die Versorgungsspannung einen weiteren Spannungsschwellwert unterschreitet. Wird beispielsweise eine unbekannte Strom- oder Spannungsquelle über den schließbaren Schaltpfad 103 kurzgeschlossen, so kann der Spannungsabfall an dem steuerbaren Schalter 105 und/oder dem Leitungswiderstand 207 des schließbaren Schaltpfades 103 zu niederohmig sein, um die abfallende Spannung in eine ausreichend hohe Versorgungsspannung zur Erzeugung des Steuersignals umzuwandeln. Liegt eine zu geringe Versorgungsspannung vor, kann die Erfassungseinrichtung 107 ausgebildet sein, das Steuersignal, insbesondere die Steuerspannung, welche an dem Gate-Kontakt des FET-Transistors angelegt wird, zu reduzieren. Durch die Reduzierung der Steuerspannung wird der FET-Transistor hochohmiger, wodurch die am Transistor abfallende Spannung erhöht wird.

Gemäß einer weiteren Ausführungsform ist die Erfassungseinrichtung 107 ausgebildet, die Signalstärke des Steuersignals zu erhöhen, wenn die Versorgungsspannung einen Minimalspannungsschwellwert überschreitet.

Gemäß einer weiteren Ausführungsform kann durch eine Regelung des Steuersignals, insbesondere der Steuerspannung auf eine ausreichende Spannungshöhe eine unbekannte Energiequelle mit geringem Ausgangsstrom dauerhaft bei Überspannung oder Verpolung über den schließbaren Schaltpfad 103 kurzgeschlossen werden.

Gemäß einer weiteren Ausführungsform umfasst die elektrische Schutzschaltung 100 einen Regler, welcher ausgebildet ist, bei einer zu geringen Versorgungsspannung die Steuerspannung zu verringern und bei einer zu hohen Versorgungsspannung die Steuerspannung zu erhöhen.

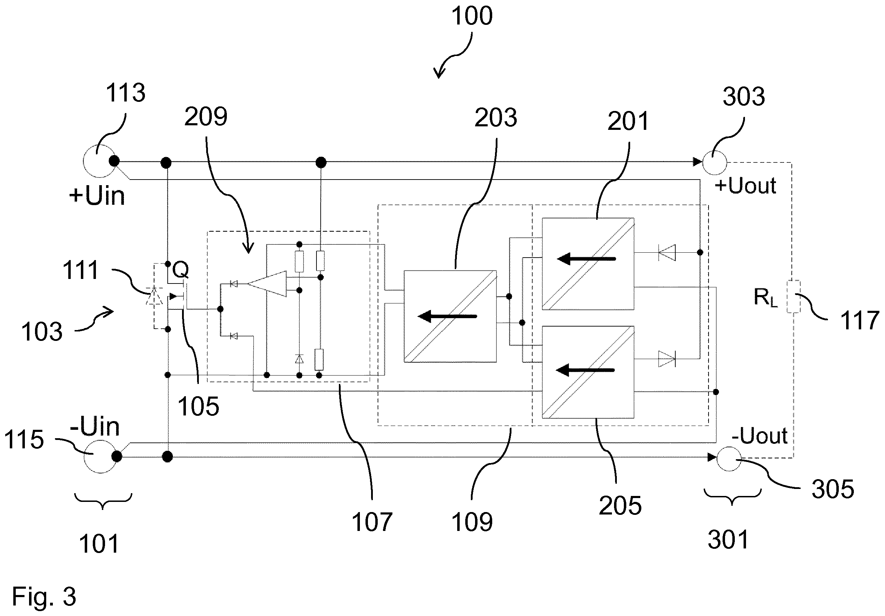

Fig. 3 zeigt ein schematisches Diagramm der elektrischen Schutzschaltung mit einem Ausgangsterminal 301 gemäß einer Ausführungsform.

Das Ausgangsterminal 301 kann ausgebildet sein, die elektrische Spannung auszugeben. Das Ausgangsterminal 301 kann parallel zu dem schließbaren Schaltpfad 103 geschalten sein. Das Ausgangsterminal 301 in Fig. 3 umfasst einen dritten Pol 303 und einen vierten Pol 304, an welchen die elektrische Spannung in Form einer Potentialdifferenz anliegen kann

Gemäß einer Ausführungsform kann die Schutzschaltung als Vierpol-Modul ausgebildet sein. Das Vierpol-Modul kann zwischen die Strom- oder Spannungsquelle und die Last 117 bzw. den Verbraucher geschaltet sein.

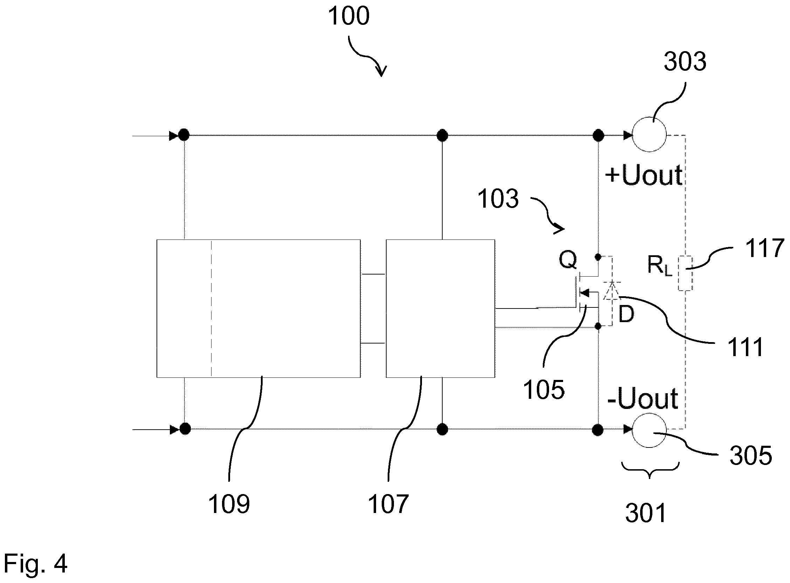

Fig. 4 zeigt ein schematisches Diagramm der elektrischen Schutzschaltung 100, welche in eine Spannungsversorgungseinrichtung oder eine Stromversorgungseinrichtung integriert ist, gemäß einer Ausführungsform.

Die Spannungsversorgungseinrichtung kann ein Spannungsnetzteil und die Stromversorgungseinrichtung kann ein Stromnetzteil sein.

Gemäß einer Ausführungsform kann die elektrische Schutzschaltung 100 als Spannungsüberwachung an einen Ausgang der Spannungsversorgungseinrichtung geschaltet sein. Bei einem Ausfall einer Spannungsregelung der Spannungsversorgungseinrichtung oder bei einer rückwärtigen Einspeisung bzw. Verpolung kann die Schutzschaltung die Versorgungsspannung begrenzen.

Gemäß einer weiteren Ausführungsform kann die elektrische Schutzschaltung 100 als verlustarmer Überspannungs- und/oder Verpolschutz ohne eine externe Energiequelle betrieben werden.

### BEZUGSZEICHENLISTE

- 100: elektrische Schutzschaltung
- 101: Eingangsterminal
- 103: schließbarer Schaltpfad
- 105: steuerbarer Schalter
- 107: Erfassungseinrichtung
- 109: Energieversorgungseinrichtung
- 111: Diode
- 113: erster Pol
- 115: zweiter Pol
- 117: Last

- 201: erster Wandler
- 203: zweiter Wandler
- 205: dritter Wandler
- 207: Widerstand
- 209: elektrische Schaltung

- 301: Ausgangsterminal
- 303: dritter Pol
- 305: vierter Pol

## Patentansprüche

1. Elektrische Schutzschaltung (100), mit:
einem Eingangsterminal (101), an welches eine elektrische Spannung anlegbar ist;
einem schließbaren Schaltpfad (103), welcher parallel zu dem Eingangsterminal (101) angeordnet ist, wobei in dem schließbaren Schaltpfad (103) ein steuerbarer Schalter (105) zum Schließen des schließbaren Schaltpfades (103) geschaltet ist;
einer Erfassungseinrichtung (107), welche an das Eingangsterminal (101) geschaltet und ausgebildet ist, eine an dem Eingangsterminal (101) anliegende elektrische Fehlspannung zu erfassen, wobei die Erfassungseinrichtung (107) ausgebildet ist, bei erfasster Fehlspannung ein Steuersignal an den steuerbaren Schalter (105) zum Schießen des steuerbaren Schalters (105) auszusenden, um den schließbaren Schaltpfad (103) zu schießen; und
**gekennzeichnet durch**
eine Energieversorgungseinrichtung (109), welche parallel zu dem schließbaren Schaltpfad (103) geschaltet und ausgebildet ist, eine über dem geschlossenen steuerbaren Schalter (105) abfallende Spannung in eine Versorgungsspannung umzuwandeln und die Versorgungsspannung an die Erfassungseinrichtung (107) anzulegen.

2. Elektrische Schutzschaltung (100) nach Anspruch 1, wobei die Energieversorgungseinrichtung (109) einen Energiespeicher, insbesondere einen Kondensator oder eine Spule, aufweist, welcher durch die Versorgungsspannung aufladbar ist, wobei der Energiespeicher mit einem Versorgungsspannungseingang der Erfassungseinrichtung (107) gekoppelt ist.

3. Elektrische Schutzschaltung (100) nach Anspruch 1 oder 2, wobei die Energieversorgungseinrichtung (109) ausgebildet ist, bei geöffnetem steuerbaren Schalter (105) oder bei Erreichen eines Spannungsschwellwertes der an dem steuerbaren Schalter (105) abfallenden Spannung in einen inaktiven Zustand überzugehen, in welchem die Umwandlung der abfallenden Spannung in die Versorgungsspannung unterbunden ist.

4. Elektrische Schutzschaltung (100) nach einem der vorstehenden Ansprüche, wobei der steuerbare Schalter (105) einen Transistor, insbesondere einen normal sperrenden FET-Transistor, umfasst.

5. Elektrische Schutzschaltung (100) nach Anspruch 4, wobei das Steuersignal eine Steuerspannung umfasst, und wobei die Erfassungseinrichtung (107) ausgebildet ist, die Steuerspannung bei Erfassen der Fehlspannung an einen Gate-Anschluss des Transistors anzulegen.

6. Elektrische Schutzschaltung (100) nach Anspruch 4 oder 5, wobei die Versorgungsspannung und die Steuerspannung gleich sind.

7. Elektrische Schutzschaltung (100) nach einem der vorstehenden Ansprüche, wobei die elektrische Fehlspannung eine Überspannung oder eine Verpolung der elektrischen Spannung ist.

8. Elektrische Schutzschaltung (100) nach einem der vorstehenden Ansprüche, wobei in den schließbaren Schaltpfad (103) eine Diode (111) parallel zu dem steuerbaren Schalter (105) geschaltet ist, wobei die Diode (111) angeordnet ist, bei der Verpolung der elektrischen Spannung das Eingangsterminal (101) kurzzuschließen.

9. Elektrische Schutzschaltung (100) nach einem der vorstehenden Ansprüche, wobei die Energieversorgungseinrichtung (109) einen ersten Wandler (201), insbesondere einen DC-DC-Wandler, umfasst, welcher ausgebildet ist, die über dem geschlossenen steuerbaren Schalter (105) abfallende Spannung in die Versorgungsspannung umzuwandeln.

10. Elektrische Schutzschaltung (100) nach Anspruch 9, wobei die Energieversorgungseinrichtung (109) einen zweiten Wandler (203) umfasst, welcher zwischen den ersten Wandler (201) und den Versorgungsspannungseingang der Erfassungseinrichtung (107) geschaltet ist, und welcher ausgebildet ist, die von dem ersten Wandler (201) erzeugte Versorgungsspannung konstant zu halten, insbesondere durch Erhöhung oder Erniedrigung konstant zu halten.

11. Elektrische Schutzschaltung (100) nach Anspruch 9 oder 10, wobei die Energieversorgungseinrichtung (109) einen dritten Wandler (205) umfasst, welcher ausgebildet ist, bei der Verpolung der elektrischen Spannung die über dem geschlossenen steuerbaren Schalter (105) abfallende Spannung in die Versorgungsspannung umzuwandeln.

12. Elektrische Schutzschaltung (100) nach einem der Ansprüche 9 bis 11, wobei die Energieversorgungseinrichtung (109) einen Gleichrichter, insbesondere eine Diode, umfasst, wobei der Gleichrichter ausgebildet ist, bei der Verpolung der elektrischen Spannung eine Verpolung der Versorgungsspannung zu unterbinden.

13. Elektrische Schutzschaltung (100) nach einem der vorstehenden Ansprüche, wobei die Erfassungseinrichtung (107) ausgebildet ist, eine Signalstärke des Steuersignals zu verringern, wenn die Versorgungsspannung einen weiteren Spannungsschwellwert unterschreitet.

14. Elektrische Schutzschaltung (100) nach einem der vorstehenden Ansprüche, wobei die Schutzschaltung ein Ausgangsterminal (301) zum Ausgeben der elektrischen Spannung umfasst.

15. Spannungsversorgungseinrichtung, insbesondere ein Spannungsnetzteil, welche die elektrische Schutzschaltung (100) gemäß einem der vorstehenden Ansprüche umfasst.

## Claims

1. An electrical protection circuit (100), comprising:
an input terminal (101) to which an electrical voltage can be applied;
a closable electrical switching path (103) which is arranged parallel to the input terminal (101), wherein a controllable switch (105) for closing the closable electrical switching path (103) is switched in the closable electrical switching path (103);
a detection device (107), which is switched to the input terminal (101) and configured to detect electrical fault voltage applied to the input terminal (101), wherein the detection device (107) is configured to send a control signal to the controllable switch (105) when electrical fault voltage is detected to close the controllable switch (105) to close the closable electrical switching path (103);
and **characterized by**
an energy supply device (109) which is arranged parallel to the closable electrical switching path (103) and is configured to convert an electrical voltage applied on the closed controllable switch (105) into an electrical supply voltage and to apply the electrical supply voltage to the detection device (107).

2. Electrical protection circuit (100) of claim 1, wherein the energy supply device (109) comprises an energy storage, in particular a capacitor or a coil, which can be charged by the electrical supply voltage, wherein the energy storage is coupled to an electrical supply voltage input of the detection device (107).

3. Electrical protection circuit (100) of claim 1 or 2, wherein the energy supply device (109) is configured to go into an inactive state with the controllable switch (105) open or when an electrical voltage threshold of the applied electrical voltage on the controllable switch (105) is reached, in which state the conversion of the applied electrical voltage into the electrical supply voltage is prevented.

4. Electrical protection circuit (100) according to one of the preceding claims, wherein the controllable switch (105) comprises a transistor, in particular comprises a normal OFF type FET.

5. Electrical protection circuit (100) of claim 4, wherein the control signal comprises an electrical control voltage and wherein the detection device (107) is configured to apply the electrical control voltage to a gate connection of the transistor when the electrical fault voltage is detected.

6. Electrical protection circuit (100) of claim 4 or 5, wherein the electrical supply voltage and the electrical control voltage are the same.

7. Electrical protection circuit (100) according to one of the preceding claims, wherein the electrical fault voltage is an electrical overvoltage or a reverse polarity of the electrical voltage.

8. Electrical protection circuit (100) according to one of the preceding claims, wherein a diode (111) that is arranged parallel to the controllable switch (105) is switched in the closable electrical switching path (103), wherein the diode (111) is positioned to electrically short-circuit the input terminal (101) in the case of reversed polarity of the electrical voltage.

9. Electrical protection circuit (100) according to one of the preceding claims, wherein the energy supply device (109) comprises a first converter (201), in particular comprises a DC-DC converter, which is configured to convert the applied electrical voltage on the controllable switch (105) into the electrical supply voltage.

10. Electrical protection circuit (100) of claim 9, wherein the energy supply device (109) comprises a second converter (203), which is switched between the first converter (201) and the electrical supply voltage input of the detection device (107) and which is configured to keep the electrical voltage generated by the first converter (201) constant, in particular by means of increase or decrease.

11. Electrical protection circuit (100) of claim 9 or 10, wherein the energy supply device (109) comprises a third converter (205), which is configured to convert the applied electrical voltage on the controllable switch (105) into the supply voltage in the case of reversed polarity of the electrical voltage.

12. Electrical protection circuit (100) according to one of claims 9 to 11, wherein the energy supply device (109) comprises a rectifier, in particular comprises a diode, wherein the rectifier is configured to prevent a reversed polarity of the electrical supply voltage in the case of reversed polarity of the electrical voltage.

13. Electrical protection circuit (100) according to one of the preceding claims, wherein the detection device (107) is configured to reduce the signal strength of the control signal when the electrical supply voltage falls below another electrical voltage threshold.

14. Electrical protection circuit (100) according to one of the preceding claims, wherein the protection circuit comprises an output terminal (301) to output the electrical voltage.

15. A power supply device, in particular a voltage power supply, which comprises the electrical protection circuit (100) according to one of the preceding claims.

## Revendications

1. Circuit de protection électrique (100) comportant :
une borne d'entrée (101) à laquelle peut être appliquée une tension électrique ;
un chemin de commutation fermable (103) qui est disposé en parallèle avec la borne d'entrée (101), dans lequel un interrupteur commandable (105) destiné à fermer le chemin de commutation fermable (103) est connecté dans le chemin de commutation fermable (103) ;
un dispositif de détection (107) qui est relié à la borne d'entrée (101) et est conçu pour détecter une tension électrique défectueuse appliquée à la borne d'entrée (101), dans lequel le dispositif de détection (107) est conçu pour envoyer un signal de commande à l'interrupteur commandable (105) pour fermer l'interrupteur commandable (105) lorsqu'une tension défectueuse est détectée afin de fermer le chemin de commutation fermable (103) ; et
**caractérisé par**
un dispositif d'alimentation en énergie (109) qui est connecté en parallèle au chemin de commutation fermable (103) et est conçu pour convertir une tension décroissante aux bornes de l'interrupteur commandable fermé (105) en une tension d'alimentation et pour appliquer la tension d'alimentation au dispositif de détection (107).

2. Circuit de protection électrique (100) selon la revendication 1, dans lequel le dispositif d'alimentation en énergie (109) comporte un accumulateur d'énergie, en particulier un condensateur ou une bobine, qui peut être chargé par la tension d'alimentation, dans lequel l'accumulateur d'énergie est couplé à une entrée de tension d'alimentation du dispositif de détection (107).

3. Circuit de protection électrique (100) selon la revendication 1 ou 2, dans lequel le dispositif d'alimentation en énergie (109) est conçu pour passer dans un état inactif dans lequel la conversion de la tension décroissante en la tension d'alimentation est empêchée, lorsque l'interrupteur commandable (105) est ouvert ou lorsqu'une valeur de seuil de la tension décroissante au niveau de l'interrupteur commandable (105) est atteinte.

4. Circuit de protection électrique (100) selon l'une des revendications précédentes, dans lequel l'interrupteur commandable (105) comprend un transistor, en particulier un transistor FET normalement bloquant.

5. Circuit de protection électrique (100) selon la revendication 4, dans lequel le signal de commande comprend une tension de commande et dans lequel le dispositif de détection (107) est conçu pour appliquer la tension de commande à une borne de grille du transistor lorsque la tension défectueuse est détectée.

6. Circuit de protection électrique (100) selon la revendication 4 ou 5, dans lequel la tension d'alimentation et la tension de commande sont égales.

7. Circuit de protection électrique (100) selon l'une des revendications précédentes, dans lequel la tension électrique défectueuse est une surtension ou une inversion de polarité de la tension électrique.

8. Circuit de protection électrique (100) selon l'une des revendications précédentes, dans lequel une diode (111) est connectée dans le chemin de commutation fermable (103) en parallèle avec l'interrupteur commandable (105), dans lequel la diode (111) est disposée de manière à court-circuiter la borne d'entrée (101) en cas d'inversion de polarité de la tension électrique.

9. Circuit de protection électrique (100) selon l'une des revendications précédentes, dans lequel le dispositif d'alimentation en énergie (109) comprend un premier convertisseur (201), en particulier un convertisseur continu-continu, qui est conçu pour convertir la tension décroissante aux bornes de l'interrupteur commandable fermé (105) en la tension d'alimentation.

10. Circuit de protection électrique (100) selon la revendication 9, dans lequel le dispositif d'alimentation en énergie (109) comprend un deuxième convertisseur (203) qui est connecté entre le premier convertisseur (201) et l'entrée de tension d'alimentation du dispositif de détection (107), et qui est conçu pour maintenir constante la tension d'alimentation générée par le premier convertisseur (201), en particulier en l'augmentant ou en la diminuant.

11. Circuit de protection électrique (100) selon la revendication 9 ou 10, dans lequel le dispositif d'alimentation électrique (109) comprend un troisième convertisseur (205) qui est conçu pour convertir la tension décroissante aux bornes de l'interrupteur commandable fermé (105) en la tension d'alimentation lors de l'inversion de polarité de la tension électrique.

12. Circuit de protection électrique (100) selon l'une des revendications 9 à 11, dans lequel le dispositif d'alimentation en énergie (109) comprend un redresseur, en particulier une diode, dans lequel le redresseur est conçu pour empêcher une inversion de polarité de la tension d'alimentation en cas d'inversion de polarité de la tension électrique.

13. Circuit de protection électrique (100) selon l'une des revendications précédentes, dans lequel le dispositif de détection (107) est conçu pour réduire une intensité de signal du signal de commande lorsque la tension d'alimentation devient inférieure à un autre seuil de tension.

14. Circuit de protection électrique (100) selon l'une des revendications précédentes, dans lequel le circuit de protection comprend une borne de sortie (301) destinée à délivrer la tension électrique.

15. Dispositif d'alimentation en tension, en particulier une alimentation de tension secteur, qui comprend le circuit de protection électrique (100) selon l'une des revendications précédentes.
